# EUROPÄISCHE PATENTANMELDUNG

(11) **EP 1 745 963 A2**
(43) Veröffentlichungstag der Anmeldung: **24.01.2007**
(21) Anmeldenummer: 06014530.7
(22) Anmeldetag: 13.07.2006
(51) Int. Cl.: B60J 7/185

(54) **Cabriolet-Fahrzeug mit Dachsicherungsmitteln, die seitliche Säulen des Windschutzscheibenrahmens durchgreifen**

(30) Priorität: 21.07.2005 DE 102005034723
(71) Anmelder: Wilhelm Karmann GmbH, 49084 Osnabrück (DE)
(72) Erfinder: Brockhoff, Franz-Ulrich, 49565 Bramsche (DE)

(57) **Zusammenfassung**

Ein Cabriolet-Fahrzeug (1) mit einem über seitliche Säulen (6) des Windschutzscheibenrahmens (4) durchgreifende Sicherungsmittel (5) in Schließstellung sicherbaren vorderen Dachende (3) wird so ausgebildet, dass die Sicherungsmittel (5) in einem unterhalb des Windschutzscheibenrahmens (4) gelegenen Karosseriebereich über Verschlussvorrichtungen (8) halterbar sind, die in Schließstellung des Daches (2) in einer Über-Totpunkt-Lage gehalten sind.

## Beschreibung

Die Erfindung betrifft ein Cabriolet-Fahrzeug mit einem Dach, dessen vorderes Dachende in Schließstellung über Sicherungsmittel halterbar ist, die seitliche Säulen des Windschutzscheibenrahmens durchgreifen, nach dem Oberbegriff des Anspruchs 1.

Es ist bei Cabriolet-Fahrzeugen üblich, das vordere Dachende, das häufig auch als Dachspitze bezeichnet wird, bei geschlossenem Dach über Verschlussglieder am Windschutzscheibenrahmen zu sichern. Dabei sind herkömmlich der Dachspitze neben ausrichtenden Zentrierzapfen Hakenteile zugeordnet, die in entsprechende Ausnehmungen des Windschutzscheibenrahmens eintauchen und mit dort angeordneten Riegeln, die sie durch Schwenkbewegung umgreifen, zusammenwirken.

Es ist in vielen Fällen jedoch wünschenswert, das Gewicht der Dachspitze zu vermindern, um dadurch das Trägheitsmoment des Daches für seine Schwenkbewegung um seitliche Hauptlager zu verkleinern und die zugehörigen Antriebe geringer dimensionieren zu können. Zudem sollte die Verletzungsgefahr, die von an der Dachspitze bei geöffnetem Dach hervorstehenden Hakenteilen resultieren kann, minimiert werden. Gleichzeitig soll der obere Querrahmenteil des Windschutzscheibenrahmens über einen möglichst großen Teil seiner Erstreckung bei einem Unfall als nachgiebiger Anprallbereich zur Verfügung stehen.

Der Erfindung liegt das Problem zugrunde, eine Sicherung des geschlossenen Daches unter möglichst weitgehender Erfüllung der o. g. Anforderungen bei einem Cabriolet-Fahrzeug zu erreichen.

Die Erfindung löst dieses Problem durch ein Cabriolet-Fahrzeug mit den Merkmalen des Anspruchs 1, des Anspruchs 3 sowie des Anspruchs 4, die einzeln oder insbesondere in Kombination miteinander verwirklicht sein können. Hinsichtlich vorteilhafter Ausgestaltungen der Erfindung wird auf die weiteren Ansprüche 2 und 5 bis 7 verwiesen.

In der Ausbildung nach Anspruch 1 ist durch die Verlegung der Sicherungsmittel durch die seitlichen Säulen des Windschutzscheibenrahmens, die sog. A-Säulen, der obere Querrahmenteil fast in seiner gesamten Breite von Verschlussmitteln freigehalten und kann zum Beispiel als Anprallfläche zur Verfügung stehen. Dadurch, dass die Sicherungsmittel in einem unterhalb des Windschutzscheibenrahmens gelegenen Karosseriebereich über Verschlüsse halterbar sind, die in Schließstellung des Daches in einer Über-Totpunkt-Lage gehalten sind, muss bei geschlossenem Dach keine dauerhafte Kraftbeaufschlagung der Verschlüsse ausgeübt werden. Irgendwelche Antriebe können daher entlastet sein. Die Schließstellung ist besonders sicher.

Sofern die Verschlüsse hydraulisch betätigbar sind, kann die Hydraulik in Schließstellung drucklos sein, so dass eine entsprechende Hydraulikpumpe nicht arbeiten muss. Die Zuverlässigkeit der Sicherung ist somit erhöht.

Eine Ausbildung der Sicherungsmittel als reine Zugseile ermöglicht die Verwendung gering dimensionierter Bauteile, da keine Druckkraft von diesen ausgeübt werden muss. Das Zugseil kann dann besonders leicht sein und benötigt nur einen minimalen Bewegungskanal in der A-Säule.

Eine Beaufschlagung von Hakenteilen durch Federkraft im Öffnungssinn stellt sicher, dass die Sicherungsmittel selbst nicht zum Öffnen der Hakenteile Kraft übertragen müssen. Insbesondere können hierfür in den seitlichen Säulen des Windschutzscheibenrahmens jeweils Federn angeordnet sein, die - besonders platzsparend - in Hülsen liegen und von einem Sicherungsmittel durchgriffen sein können.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

### In der Zeichnung zeigt:

- Fig. 1: eine abgebrochene, schematische Ansicht eines erfindungsgemäßen Cabriolet-Fahrzeugs von schräg hinten bei geöffnetem Dach und geöffneter Verschlussvorrichtung für das vordere Dachende,

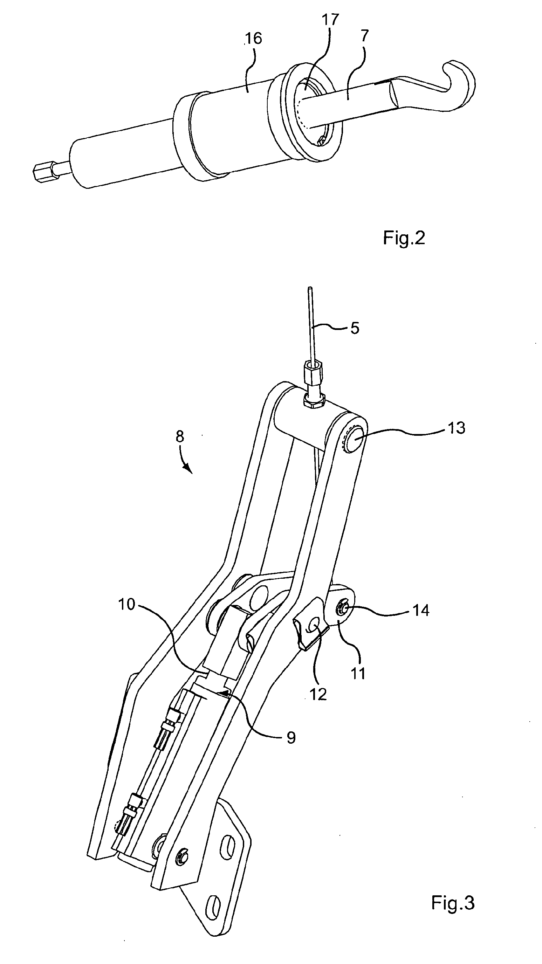

- Fig. 2: eine Einzelteilansicht des Ausschnitts II in Fig. 1,
- Fig. 3: eine Einzelteilansicht des Ausschnitts III in Fig. 1,
- Fig. 4: die Verschlussvorrichtung nach Fig. 3 in geöffneter Stellung,
- Fig. 5: eine ähnliche Ansicht wie Fig. 4 während des Schließens der Verschlussvorrichtung,
- Fig. 6: eine ähnliche Ansicht wie Fig. 5 bei geschlossener Verschlussvorrichtung,
- Fig. 7: eine Darstellung des in Fig. 2 dargestellten Federelements in entspannter Stellung des in Fig. 2 einzeln dargestellten Hakenteils entsprechend der Stellung der Verschlussvorrichtung nach Fig. 4,
- Fig. 8: eine Darstellung des in Fig. 2 dargestellten Federelements in teilweise entspannter Stellung des in Fig. 2 einzeln dargestellten Hakenteils entsprechend der Stellung der Verschlussvorrichtung nach Fig. 5,
- Fig. 9: eine Darstellung des in Fig. 2 dargestellten Federelements in gespannter Stellung des in Fig. 2 einzeln dargestellten Hakenteils entsprechend der geschlossenen Stellung der Verschlussvorrichtung nach Fig. 6

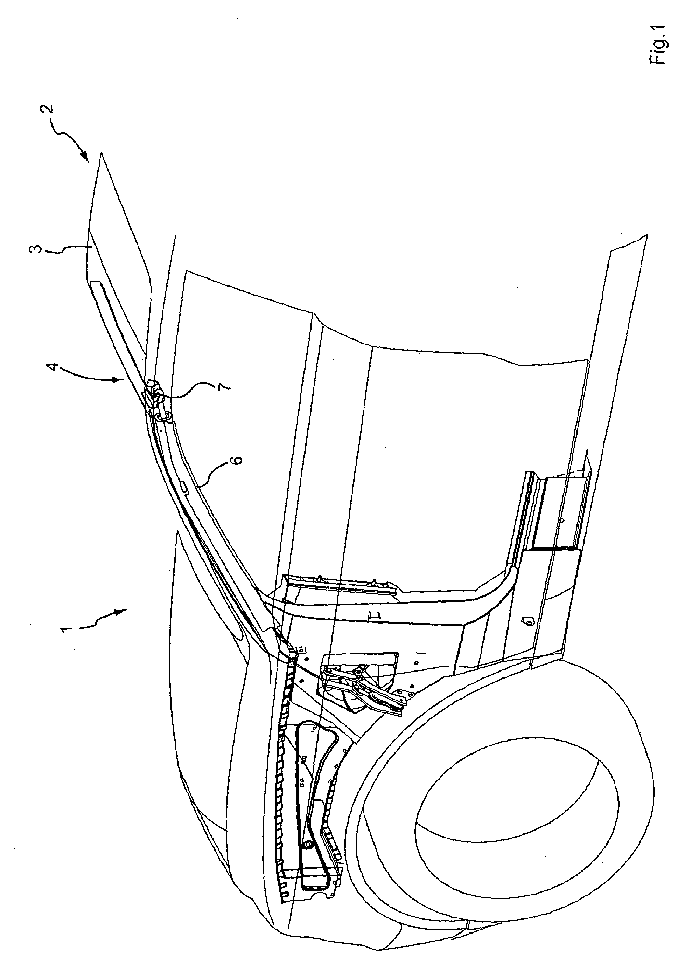

Das in Fig. 1 im vorderen Bereich dargestellte Cabriolet-Fahrzeug 1 umfasst ein bewegliches Dach 2, das beispielsweise als Retractable Hardtop (RHT) oder zumindest teilweise als Softtop mit einem in sich starren vorderen Dachende 3 ausgebildet sein kann.

Dachform und Fahrzeuggröße können verschieden ausgebildet sein. So kann zum Beispiel das Cabriolet-Fahrzeug 1 sowohl ein Zweisitzer als auch ein Cabriolet-Fahrzeug mit einem größeren Innenraum und etwa zwei oder mehr Sitzreihen hintereinander sein.

Bei geschlossenem Dach 2 ist dieses über sein vorderes Dachende 3 an einem Windschutzscheibenrahmen 4 befestigt. Hierzu sind Sicherungsmittel 5 vorgesehen, die seitliche Säulen 6, sog. A-Säulen, des Windschutzscheibenrahmens 4 durchgreifen und jeweils die Bewegung eines oberen, beweglichen Hakenteils 7 zur eigentlichen Verbindung zu dem Dach 2 steuern. Die Hakenteile 7 sind hier als einfache, nach oben offene Haken dargestellt, die mit komplementären Querriegeln des Daches 2 zusammenwirken. Sie können jedoch unterschiedlich ausgebildet sein und insbesondere auch Zentrierungshilfen, hier nicht dargestellt, für die Dachspitze 3 umfassen.

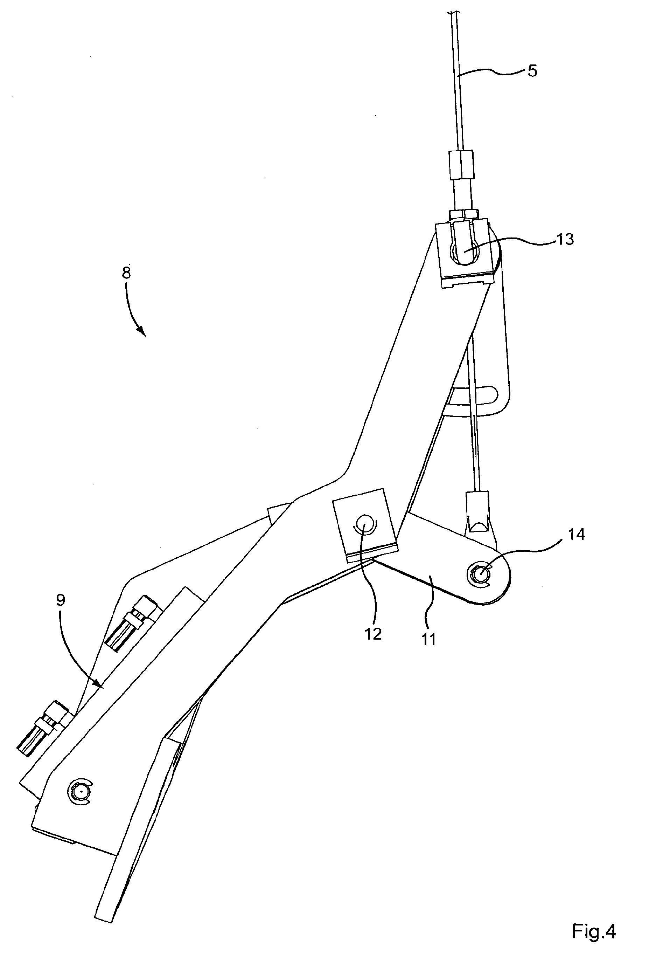

Die Sicherungsmittel 5 sind hier nur auf Zug zu beanspruchen und dafür als Zugseile ausgebildet. Sie sind in einem unterhalb des Windschutzscheibenrahmens 4 gelegenen Karosseriebereich über Verschlussvorrichtungen 8 beweglich verankert, die in den Figuren 4 bis 6 im Detail dargestellt sind. In Schließstellung des Daches 2 halten sie die Sicherungsmittel 5 in einer Über-Totpunkt-Lage.

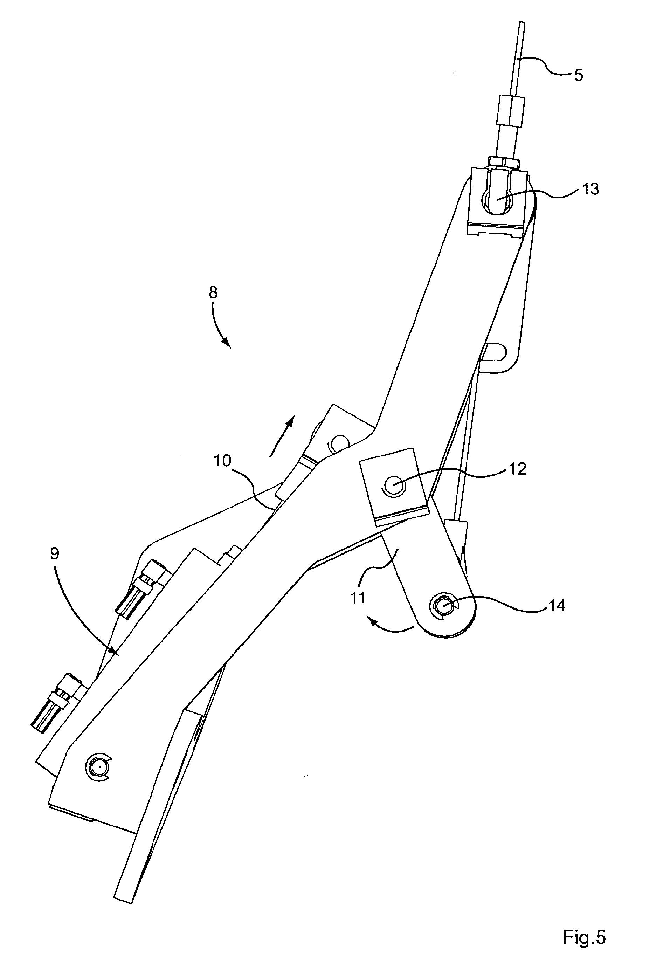

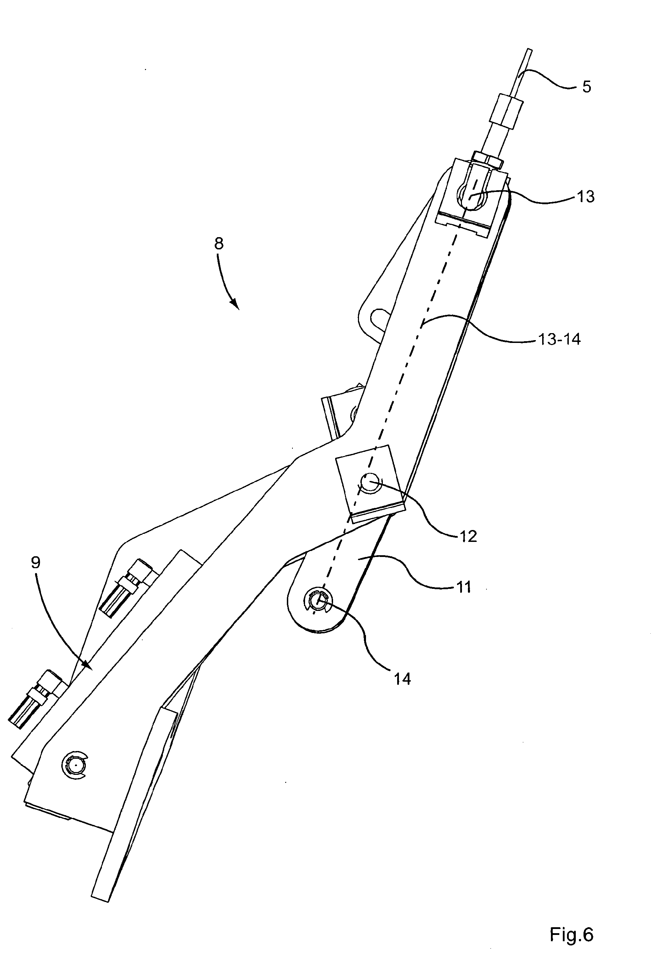

Im Ausführungsbeispiel sind die Verschlussvorrichtungen 8 hydraulisch über Antriebe 9 betätigbar, was nicht zwingend ist. Auch zum Beispiel elektrische Linearmotoren kommen in Betracht. In der geöffneten Stellung der Verschlussvorrichtungen 8 nach Fig. 4 sind die Antriebe 9 eingefahren. Zum Schließen der Vorrichtungen 8 werden die Kolbenstangen 10 der Antriebe 9 ausgefahren (Fig. 5, Fig. 6), wodurch jeweils der Hebel 11 um ein karosseriefestes Gelenk 12 verschwenkt wird und dabei des Zugseils 5 mit einer Abwärtskomponente um das Gelenk 12 einschwenkt. Dadurch werden die am anderen Ende der Seils 5 gehaltenen Hakenteile 7 nach unten und vorne gezogen und sichern das Dach 2.

Die Zugseile 5 sind an den Verschlüssen 8 einerseits über ein um eine karosseriefeste Achse schwenkbares oberes Widerlager 13 und andererseits mit dem unteren Ende an der beweglichen Anlenkung 14 am Hebel 11 gehalten. Durch das Einschwenken des Hebels 11 um das Gelenk 12 passiert die Verbindungslinie 13-14 das Gelenk 12 und gerät somit in eine Über-Totpunkt-Lage.

In der geschlossenen Stellung kann daher der HydraulikAntrieb drucklos geschaltet sein, da ein Zug des Seils 5 nach oben im Schließsinn des Verschlusses wirkt. Somit tritt eine Selbstsicherung ein.

Für eine Öffnung des Daches 2 wird der Antrieb 9 eingefahren, so dass der Hebel 11 gegensinnig um das Gelenk 12 zurückschwenkt. Dadurch wird das Zugseil 5 entlastet. Da es jedoch keine Zugkraft überträgt, resultiert allein daraus noch keine das Dach 2 lösende Aufwärtsbewegung der Hakenteile 7.

Für deren Beaufschlagung im Öffnungssinn ist daher zusätzlich eine Federkraftbeaufschlagung vorgesehen.

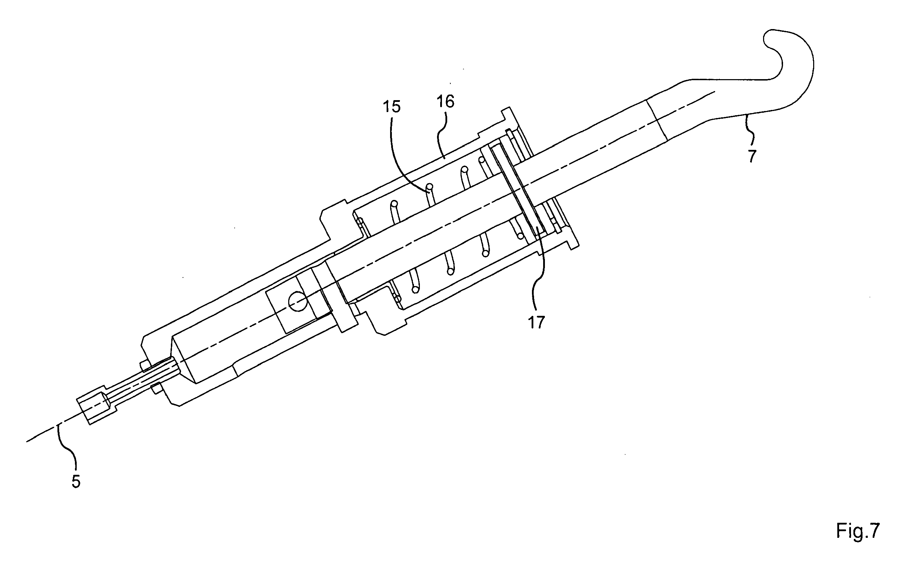

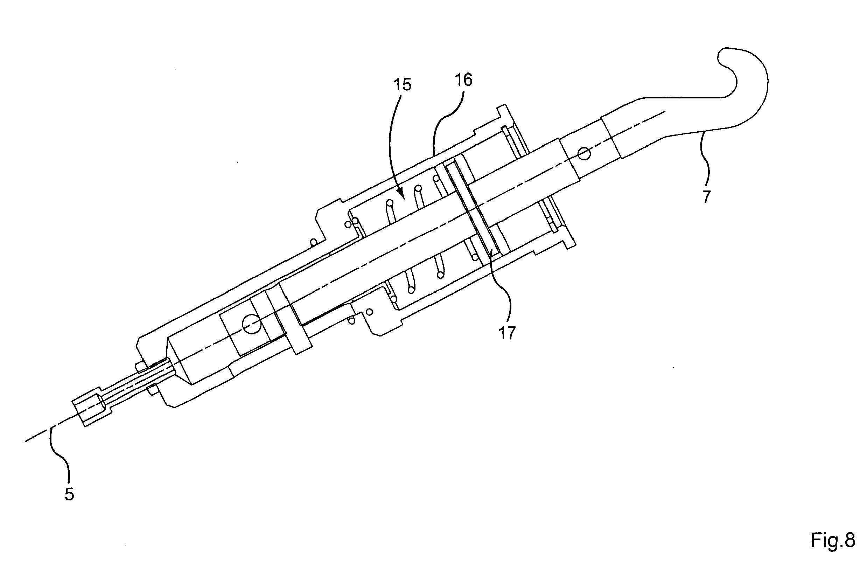

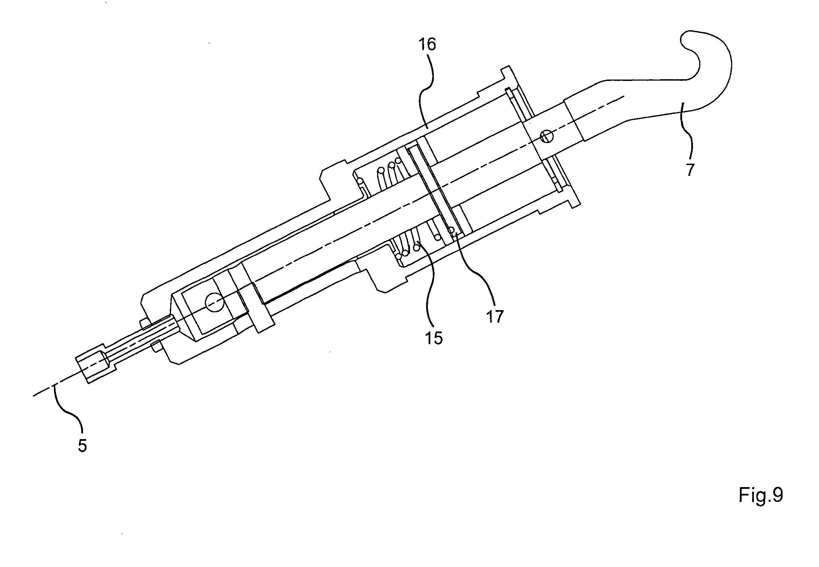

Hierfür sind in den seitlichen Säulen 6 des Windschutzscheibenrahmens 4 jeweils Federn 15 angeordnet, die in den Figuren 7 bis 9 im Detail dargestellt sind und im äußersten oberen Endbereich der A-Säulen 6 gehalten sind.

Die Federn 15 sind als Schraubenfedern ausgebildet und in längs zur Erstreckung der seitlichen Säulen 6 erstreckten Hülsen 16 angeordnet. Die Kraftwirkungsrichtung der Federn 15 ist daher axial zu den A-Säulen 6. Die Hülsen 16 sind dabei so symmetrisch zu den A-Säulen 6 angeordnet, dass sie in etwa mittig jeweils von dem hier als Zugseil ausgebildeten Sicherungsmittel 5 durchgriffen sind. Die Federn 15 selbst wirken hingegen direkt auf eine Widerlagerplatte 17 ein, die starr auf dem Schaft des Hakenteils 7 angeordnet ist. Erst nach unten hin schließt sich hieran das Zugseil 5 an. Der Übergang vom offenen zum geschlossenen Hakenteil 7 ist als Abfolge der Figuren 7 bis 9 dargestellt.

Nach Lösen des Hebels 11 in der Verschlussvorrichtung 8 kann daher die Kraft der Feder 15 die Widerlagerplatte 17 - und somit das Hakenteil 7 - aufwärts und heckwärts drükken und die Lösung der Riegel der Dachspitze 3 bewirken.

Da unterhalb der Federn 15 nur noch die Zugseile 5 in den A-Säulen 6 verlaufen, können diese ohne Änderungen ihres Innendurchmessers und ohne Stabilitätseinbußen gefertigt werden und auch eine Funktion als Überrollschutz ungehindert ausüben.

## Patentansprüche

1. Cabriolet-Fahrzeug (1) mit einem über seitliche Säulen (6) des Windschutzscheibenrahmens (4) durchgreifende Sicherungsmittel (5) in Schließstellung sicherbaren vorderen Dachende (3),
**dadurch gekennzeichnet,**
**dass** die Sicherungsmittel (5) in einem unterhalb des Windschutzscheibenrahmens (4) gelegenen Karosseriebereich über Verschlussvorrichtungen (8) halterbar sind, die in Schließstellung des Daches (2) in einer Über-Totpunkt-Lage gehalten sind.

2. Cabriolet-Fahrzeug (1) nach Anspruch 1,
**dadurch gekennzeichnet,**
**dass** die Verschlussvorrichtungen (8) hydraulisch (9) betätigbar sind und die Hydraulik in Schließstellung drucklos ist.

3. Cabriolet-Fahrzeug (1) mit einem über seitliche Säulen (6) des Windschutzscheibenrahmens (4) durchgreifende Sicherungsmittel (5) in Schließstellung sicherbaren vorderen Dachende (3), insbesondere nach einem der Ansprüche 1 oder 2,
**dadurch gekennzeichnet,**
**dass** die Sicherungsmittel (5) zumindest bereichsweise als Zugseile ausgebildet sind.

4. Cabriolet-Fahrzeug (1) mit einem über seitliche Säulen (6) des Windschutzscheibenrahmens (4) durchgreifende Sicherungsmittel (5) in Schließstellung sicherbaren vorderen Dachende (3), insbesondere nach einem der Ansprüche 1 bis 3,
**dadurch gekennzeichnet,**
**dass** in Öffnungsstellung des Daches (2) nach oben und hinten aus den seitlichen Säulen (6) ausgreifende Hakenteile (7) durch Federkraft im Öffnungssinn beaufschlagbar sind.

5. Cabriolet-Fahrzeug (1) nach Anspruch 4,
**dadurch gekennzeichnet,**
**dass** in den seitlichen Säulen (6) des Windschutzscheibenrahmens (4) jeweils Federn (15) angeordnet sind.

6. Cabriolet-Fahrzeug (1) nach Ansprüche 5,
**dadurch gekennzeichnet,**
**dass** die Federn (15) als Schraubenfedern ausgebildet und in längs zur Erstreckung der seitlichen Säulen (6) erstreckten Hülsen (16) angeordnet sind.

7. Cabriolet-Fahrzeug (1) nach Anspruch 6,
**dadurch gekennzeichnet,**
**dass** die Hülsen (16) jeweils von einem Sicherungsmittel (5) durchgriffen sind.
